# EUROPEAN PATENT SPECIFICATION

(11) **EP 0 941 030 B1**
(45) Date of publication and mention of the grant of the patent: **20.03.2002**
(21) Application number: 97953937.6
(22) Date of filing: 17.11.1997
(51) Int. Cl.: A23L 1/40, A23P 1/02, A23L 1/212, A23L 1/311

(54) **FROZEN FOOD PRODUCT**
TIEFGEFRORENES NAHRUNGSMITTEL
DENREE ALIMENTAIRE CONGELEE

(30) Priority: 20.11.1996 EP 96308406
(43) Date of publication of application: 15.09.1999
(73) Proprietor: UNILEVER N.V., 3013 AL Rotterdam (NL)
(72) Inventor: GAGLIARDI, Vittorio, I-00128 Rome (IT); PANAIOLI, Sandro, I-00040 Pomezia (IT)
(74) Representative: Mulder, Cornelis Willem Reinier, Dr.
(86) International application number: EP9707345
(87) International publication number: WO9821982

(56) References cited:
- EP-A- 0 057 299
- WO-A-96/06535
- BE-A- 738 503
- BE-A- 793 411
- DE-A- 1 913 916
- FR-A- 2 463 585
- FR-A- 2 526 638

## Description

The present invention relates to a frozen food product for use as a cooking ingredient and to processes for preparing the food product.

Traditionally, bones, vegetables and fish are stewed to provide a liquid which is subsequently used as a basis for soups, gravies and sauces, for example.

This is time-consuming as the process of stewing commonly takes at least one hour.

In Belgium Patent No. 793,411 a method for the preparation of food bases is described which comprises the preparation of fried onions, the subsequent addition thereto of optionally pre-cooked quick-frozen vegetable, meat and sauce ingredients, followed by portioning and freezing.

The products require a rancidity-prevention agent. Their consistency does not allow easy manufacturing flexibility of shaping, nor does their ready-meal nature allow the end-consumer the multi-functional versatility often desired.

An alternative liquid base is provided by stock cubes and granules. The cubes and granules are prepared by agglomerating a dry powder flavour mix and an aqueous flavour mix. The resulting granules may be packed directly for consumer use or shaped into cubes, which are then packed for subsequent use. The consumer uses the cubes and Granules by dispersing them in cold or hot water to prepare sauces, soups etc.

A problem with these stock cubes and granules is that the flavours are not very stable over prolonged storage without the help of additives.

Another problem is that synthetic flavourings and flavour enhancers may be used in the mixes, resulting in a product that can not be perceived by consumers as containing natural ingredients alone.

Also, the stock cubes and granules are not very versatile as cooking ingredients; they have a limited spectrum of use.

The present invention seeks to provide an improved food product for use as a cooking ingredient, particularly as a basis for soups, sauces etc, that provide consumer convenience and multi-functionality in application, while allowing the substantial preservation of the naturalness, the flavour and the nutritional health aspects of the ingredients used.

In accordance with the present invention there is provided a frozen food product on the basis of food ingredients of vegetable or animal origin, for use as a cooking ingredient obtainable by a process comprising the following steps:
a) sauteing more than one food ingredient to reduce their water content by at least 10% by weight and to create a desirable fried taste,
b) homogenising the food ingredients to form a homogenate with a viscosity of between 20 Nsm⁻² (20,000 cps) and 40 Nsm⁻² (40,000 cps) when cooled to below 10°C,
c) shaping the homogenate through a dosing nozzle.
d) freezing the shaped homogenate.

The food ingredients may be selected from a wide range of basic food stuffs selected from vegetables, meat, fruits, nuts and mixtures thereof. Suitable food ingredients include a wide range of vegetables such as carrots, peas, aubergines, cauliflower, peppers and the like, meats such as porc, veal, poultry, fish or red meats, fruits such as eg pineapple or peach, nuts such as chestnuts or walnuts and mixtures of such ingredients.

The food ingredients for use in the present invention are preferably of vegetable origin. They may comprise a plurality of different vegetables.

In step (a) the water content of the food ingredients is reduced by 10% or more. The food ingredients for use in the present invention normally have water contents in the range of from 50 to 95% by weight. Vegetables commonly have an initial water content of from 85 to 90% by weight, whereas the initial water contents of meats, poultry, fish and the like generally range between 50 to 80%.

After heating step (a), the food ingredients preferably have reduced water contents of from 50% or even from 40% to 65% by weight. During the heating step (a), the water content of the food ingredients is preferably reduced by at least 20% by weight, more preferably by at least 30% by weight. For the food ingredients of vegetable origin water-content reductions of at least 40% by weight are particularly preferred.

In total, the food ingredients, in particular the vegetables, may be heated in step (a) for up to two hours.

In a preferred embodiment of the present invention, the food ingredients are heated in step (a) by sauteeing them in fat, such as oil. This causes evaporation of water therefrom and, as a result of Maillard reactions, creates a desirable fried taste, without the addition of artificial flavourings. This sauteeing is conducted at temperatures of 100 to 160 °C, for example.

In addition, the food ingredients may be subsequently cooked to further reduce their water content, if necessary. This subsequent cooking is conducted at temperatures of 100 °C or above, for example. The cooking equipment preferably enables these high temperatures to be reached and allows a high rate of evaporation; this may be achieved using wide cooking pots having large apertures; it may also be achieved by cooking the vegetables in a closed system and then placing them in a vacuum chamber to evaporate the water.

After the heating step (a) the water-reduced food ingredients are subjected to a homogenization step (b) in which the particle sizes of the food ingredients are reduced to form a fine homogenic, largely uniform consistency.

To this purpose suitable homogenizing and size-reducing equipment can be used, for example an in-line homogenizer such as an in-line toothed colloid mill through which the food ingredients are fed at high-speed.

Typically, the homogenising step (b) should lead to particle sizes of below 5 mm, preferably below 3 mm, and particularly within the range of 0.5 and 2 mm, such as eg about 1 mm.

Using this process, the inventors have found that a homogenate can be prepared which has a sufficiently high viscosity for effective shaping. This viscosity is preferably achieved naturally, without the addition of artificial thickeners.

For effective shaping, the homogenate, when cooled to below 10 °C, preferably has a viscosity of from 20 to 40 Nsm⁻² (20,000 to 40,000 cps). When heated to above 60 °C, it preferably has a viscosity of from 5 to 20 Nsm⁻² (5,000 to 20,000 cps).

To the homogenate resulting from the step (b) also pieces of the various types of food ingredients, but particularly pieces of vegetables, may be added. Preferably pieces of the main constituent of the homogenate are added, such as eg aubergine or carrot pieces ot an aubergine-based or carrot-based homogenate.

This is most suitably done in between the homogenizing step (b) and any subsequent shaping and freezing steps. These pieces are preferably at least partially dehydrated so that their addition does not significantly increase the water content of the homogenate. Otherwise, the viscosity of the homogenate may be too low to achieve effective subsequent shaping. Partially-dehydrated pieces, particularly partially vegetable pieces, also impart a desirable taste to the food product.

In general, on a weight basis, not more than 25% of partially-dehydrated pieces are added, and preferably such amounts lie within the range of from 5 to 15% to achieve optimal taste and visual appearance benefits.

Typically, the particulates added in between steps (b) and the subsequent shaping step have particle sizes in the range of 5 to 20 mm, sizes between 6 and 12 mm being preferred.

Optionally after addition of the particulates some gentle stirring is applied to achieve an evenly distribution thereof over the homogenate.

Suitable partially-dehydrated vegetable pieces may be prepared using the process disclosed in WO 96/06535.

According to the previously-disclosed process, a vegetable is flash blanched in up to 100% saturated steam, steam cooked in 35 to 65% saturated steam and cooked by exposure to infra red radiation for from 1.5 to 6.0 minutes. Preferably, the flash blanching is conducted at 100 - 300 °C for 60 to 180 seconds, the steam cooking is conducted at 200 - 300 °C for 60 to 180 seconds and the infra red 200 - 300 °C for 60 to 180 seconds and the infra red cooking is conducted with an air temperature of 240 - 350 °C. Prior to flash blanching, the vegetable may be heated up to 95 °C by exposure to microwave radiation for up to 90 seconds.

The food ingredients used in step (a) and homogenized in step (b) or added as pieces between step (b) and the subsequent shaping step may additionally comprise spices, herbs or flavouring ingredients preferably of a natural origin. However, it is preferred to only use basic food ingredients fully relying on their natural taste which the process of the invention allows to fully retain.

The homogenizing step (b) is followed by a shaping step (c). In this step the homogenate may be shaped using a dosing nozzle. Effective shaping is achieved when the shaped homogenate substantially retains its shape at ambient temperatures for a sufficient period of time to transport the shaped homogenate to a freezer, where the shaped homogenate is frozen (step d).

Preferably, the freezing step is relatively quick to ensure a rapid freezing of those outerparts of the shaped homogenate which substantially assist in shape retention during manufacturing. Examples of suitable freezers are eg plate and blast freezers. The lower end viscosities of the homogenate after step (b) can be accommodated by more rapid freezing regimes.

Preferably, the homogenate is shaped such that it has at least some resistance to thermal shock; this resistance is particularly useful when the product is bought by consumers and transported from the shops to their homes.

In a preferred embodiment, the shape of the homogenate is that of a rosette, the edge of which (ie the petals) can either stand upright or be spiral-shaped. A compromise should preferably be reached between the size of the rosette and the shape of the petals, so as to allow the inclusion of any vegetable pieces and to limit the surface area. Limiting the surface area helps to minimise shape loss if the food product is subjected to thermal shock. The weight of each rosette normally ranges of from 3 to 25 grams, weights from 10 to 20 grams and particularly from 10 to 15 grams being preferred. In addition to providing resistance to thermal shock, a rosette shape provides eye appeal to consumers.

Other shapes are possible. For example, the shaped homogenate may have semi-spherical forms, or be doughnutshaped, disk-shaped or pellet-shaped.

The frozen, shaped homogenate is used by consumers to make sauces, soups, gravies etc. For example, hot water can be added to it, or it can be heated with olive oil, bechamel sauce or cream. It is suitable for multi-functional use. Moreover, it is preferably prepared from only natural ingredients, particularly without added viscosity-regulating agents giving a consumer-perceivable advantage over traditional stock cubes and granules.

The frozen, shaped homogenate has a surprisingly long shelf-life without the need for preservatives, which are preferably excluded.

Examples of the products and processes of the invention will now be described to illustrate, but not to limit, the invention.

### Example

A mixture of vegetables, including carrots, onions, celery and leeks, were sauteed in olive oil and then cooked in a big, open pan at approximately 100 °C. The resulting mixture was homogenised using an in-line system in which the vegetables were fed through mesh at a very high speed to form a suspension of vegetable particles. The homogenate was cooled using a scraped surface heat exchanger to a temperature of below 10□ C and stored in a cooled tank.

Separately, pieces of mushroom, artichoke, carrot and onion were flash blanched for 60 seconds in 100% saturated steam in a jet stream oven set at 300 °C. The steam was delivered to the oven at a rate of 500 kg/h. The air speed in the oven was from 17 to 25 m/s. The pieces were then transferred to a second jet stream oven where they were steam cooked at 300 °C in approximately 50% saturated steam for 65 seconds. The steam-delivery rate to the oven and the air speed in the oven were again 500 kg/h and 17 to 25 m/s respectively. The pieces were next transferred to a direct fired oven for infra-red cooking for 210 seconds. The air temperature in the oven increased from 250 to 340 °C as the vegetable pieces progressed through the oven on a conveyor belt. As a result of this process, the vegetables had lost approximately 50% of their initial water content.

The partially-dehydrated vegetable pieces were added to the homogenate in the tank via an ingredient feeder. The resulting mixture was fed to a standard piston-doser equipped with a shaping nozzle. The homogenate was shaped into rosettes weighing between 10 and 20 grams, whilst substantially avoiding the nozzle being occluded by the presence of vegetable pieces. These products were transported onto a supercontact belt freezer; very quick "foot freezing" was achieved by placing the rosette-shaped products on to a polyethylene 10/20 µm (micron) film, which was conveyed over a pre-set time into close contact with a flat-surface exchanger, within which ammonia was evaporated at a temperature of -40 °C. Once frozen, the products were packed into bags and stored in a freezer.

To use one of the rosette-shaped products as a cooking ingredient, it was taken from the freezer and heated with water in a sauce pan. A soup was produced.

Another rosette-shaped product was taken from the freezer and heated with cream and pieces of chicken in a sauce pan. A pasta sauce was produced.

A veloute was also prepared by adding a melted rosette-shaped product to a roux of butter and flour.

A garnishing sauce or topping for vegetables, crackers, bread etc was prepared by taking a rosette-shaped product from the freezer and heating it with bechamel sauce in a sauce pan.

## Claims

1. A frozen food product on the basis of more than one food ingredient of vegetable or animal origin, for use as a cooking ingredient which is obtainable by a process comprising the following steps:
a) sautéing more than one food ingredient to reduce their water content by at least 10% by weight and create a desirable fried taste
b) homogenising the food ingredients to form a homogenate with a viscosity of between 20 Nsm⁻² (20,000 cps) and 40 Nsm⁻² (40,000 cps) when cooled to below 10°C
c) shaping the homogenate through a dosing nozzle
d) freezing the shaped homogenate.

2. A product according to claim 1, wherein the food ingredients are of vegetable origin and during step (a) the water content thereof is reduced by at least 40% by weight.

3. A product according to any one of the preceding claims further comprising up to 25% by weight of non-homogenised vegetable pieces.

4. A product according to claim 3, wherein the vegetable pieces are partially dehydrated.

5. A product according to any preceding claim which has a rosette shape.

6. A process for preparing a frozen food product for use as a cooking ingredient comprising the following steps:
a) Sautéing more than one food ingredient of vegetable or animal origin to reduce their water content by at least 10% by weight and create a desirable fried taste
b) homogenising the food ingredients to form a homogenate with a viscosity of between 20 Nsm⁻² (20,000 cps) and 40 Nsm⁻² (40,000 cps) when cooled to below 10°C
c) shaping the homogenate through a dosing nozzle
d) freezing the shaped homogenate.

7. A process according to claim 6, wherein partially dehydrated vegetable pieces are added in between steps (b) and (c).

8. A process according to any one of claims 6 or claim 7, wherein step (a) comprises sautéing the food ingredients in fat.

9. Use of the product claimed in any one of claims 1 to 5 as a cooking ingredient.

## Patentansprüche

1. Gefrorenes Nahrungsmittelprodukt auf der Basis von mehr als einer Nahrungsmittelzutat pflanzlichen oder tierischen Ursprungs zur Verwendung als Kochzutat, welches durch ein Verfahren erhältlich ist, welches die folgenden Schritte umfasst:
a) Sautieren von mehr als einer Nahrungsmittelzutat, um ihren Wassergehalt um mindestens 10 Gew.-% zu reduzieren und einen wünschenswerten gebratenen Geschmack zu erzeugen
b) Homogenisieren der Nahrungsmittelzutaten, um ein Homogenisat mit einer Viskosität von zwischen 20 Nsm⁻² (20000 cps) und 40 Nsm⁻² (40000 cps), wenn unter 10°C gekühlt, zu bilden
c) Formen des Homogenisats durch eine Dosierdüse
d) Einfrieren des geformten Homogenisats.

2. Produkt gemäß Anspruch 1, worin die Nahrungsmittelzutaten pflanzlichen Ursprungs sind und während Schritt (a) der Wassergehalt davon um mindestens 40 Gew.-% reduziert wird.

3. Produkt gemäß einem der vorhergehenden Ansprüche, welches ferner bis zu 25 Gew.-% an nicht homogenisierten Pflanzenstücken umfasst.

4. Produkt gemäß Anspruch 3, worin die Pflanzenstücke teilweise entwässert sind.

5. Produkt gemäß einem der vorhergehenden Ansprüche, welches eine Rosettenform hat.

6. Verfahren zum Herstellen eines gefrorenen Nahrungsmittelprodukts zur Verwendung als Kochzutat, welches die folgenden Schritte umfasst:
a) Sautieren von mehr als einer Nahrungsmittelzutat pflanzlichen oder tierischen Ursprungs, um ihren Wassergehalt um mindestens 10 Gew.-% zu reduzieren und einen wünschenswerten gebratenen Geschmack zu erzeugen
b) Homogenisieren der Nahrungsmittelzutaten, um ein Homogenisat mit einer Viskosität von zwischen 20 Nsm⁻² (20000 cps) und 40 Nsm⁻² (40000 cps), wenn unter 10°C gekühlt, zu bilden
c) Formen des Homogenisats durch eine Dosierdüse
d) Einfrieren des geformten Homogenisats.

7. Verfahren gemäß Anspruch 6, wobei teilweise entwässerte Pflanzenstücke zwischen Schritten (b) und (c) zugegeben werden.

8. Verfahren gemäß einem der Ansprüche 6 oder Anspruch 7, wobei Schritt (a) Sautieren der Nahrungsmittelzutat in Fett umfasst.

9. Verwenden des ein einem der Ansprüche 1 bis 5 beanspruchten Produkts als Kochzutat.

## Revendications

1. Denrée alimentaire congelée à base d'une ou de plusieurs denrées alimentaires d'origine végétale ou animale, destinée à être utilisée en tant qu'un ingrédient culinaire et pouvant être obtenue par le procédé comprenant les étapes consistant à :
a) faire sauter plus d'une denrée alimentaire afin de réduire leur teneur en eau d'au moins 10 % en poids et de créer un goût frit souhaitable ;
b) homogénéiser les denrées alimentaires afin de former un produit homogène ayant une viscosité comprise entre 20 Nsm⁻² (20.000 centipoises) et 40 Nsm⁻² (40.000 centipoises) lorsque refroidi à une température inférieure à 10°C ;
c) mettre en forme la denrée homogénéisée en la faisant passer par une buse de dosage ;
d) congeler la denrée congelée mise en forme.

2. Denrée selon la revendication 1, dans laquelle les ingrédients alimentaires sont des ingrédients alimentaires d'origine végétale ou animale dont la teneur en eau est réduite d'au moins 40 % en poids dans le cadre de l'étape (a).

3. Denrée selon l'une quelconque des revendications précédentes comprenant jusqu'à 25 % en poids de morceaux de légumes non homogénéisés.

4. Denrée selon la revendication 3, dans laquelle les morceaux de légume sont partiellement déshydratés.

5. Denrée selon l'une quelconque des revendications précédentes ayant la forme d'une rosette.

6. Procédé de préparation d'une denrée alimentaire congelée destinée à être utilisée en tant qu'ingrédient culinaire comprenant les étapes consistant à :
a) faire sauter plus d'une denrée alimentaire afin de réduire leur teneur en eau d'au moins 10 % en poids et de créer un goût frit souhaitable ;
b) homogénéiser les denrées alimentaires afin de former un produit homogène ayant une viscosité comprise entre 20 Nsm⁻² (20.000 centipoises) et 40 Nsm⁻² (40.000 centipoises) lorsque refroidi à une température inférieure à 10°C ;
c) mettre en forme la denrée homogénéisée en la faisant passer par une buse de dosage ;
d) congeler la denrée congelée mise en forme.

7. Procédé selon la revendication 6, dans lequel des morceaux de légumes partiellement déshydratés sont ajoutés entre les étapes (b) et (c).

8. Procédé selon l'une quelconque des revendications 6 ou 7, dans lequel l'étape (a) comprend le fait de faire sauter les ingrédients alimentaires dans de la matière grasse.

9. Utilisation de la denrée selon l'une quelconque des revendications 1 à 5 en tant qu'un ingrédient culinaire.
